# EUROPÄISCHE PATENTANMELDUNG

(11) **EP 3 336 365 A1**
(43) Veröffentlichungstag der Anmeldung: **20.06.2018**
(21) Anmeldenummer: 17204550.2
(22) Anmeldetag: 30.11.2017
(51) Int. Cl.: F16B 13/06, F16B 31/02, F16B 37/14

(54) **EINSEITIG GESCHLOSSENE MUTTER, SPREIZANKER MIT DIESER MUTTER UND VERFAHREN ZUM SCHRAUBEN UND FESTZIEHEN DER MUTTER**

(30) Priorität: 19.12.2016 DE 102016124789
(71) Anmelder: fischerwerke GmbH & Co. KG, 72178 Waldachtal (DE)
(72) Erfinder: Kaupp, Andreas, 72280 Dornstetten (DE)
(74) Vertreter: Suchy, Ulrich Johannes

(57) **Zusammenfassung**

Die Erfindung betrifft eine einseitig geschlossene Mutter (7) zum Eintreiben und Aufspreizen eines Spreizankers (1). Die Erfindung schlägt vor, die Mutter (7) mit einer ersten Sollbruchstelle (9) an einer geschlossenen Stirnseite und einer zweiten Sollbruchstelle (16) zwischen zwei Sechskanten als Werkzeugsitzen (15, 17) auszubilden. Der Spreizanker (1) lässt sich mit der Mutter (7) in ein Ankerloch (10) eintreiben und durch Drehen an einem ersten Werkzeugsitz (15) aufspreizen, wobei zuerst die geschlossene Stirnseite an der ersten Sollbruchstelle (9) geöffnet wird, so dass ein Ankerschaft (2) austreten kann, und bei Erreichen eines Bruchmoments der erste Werkzeugsitz (15) an der zweiten Sollbruchstelle (16) von der Mutter (7) getrennt wird. Zum Lösen lässt sich die Mutter (7) danach am zweiten Werkzeugsitz (17) drehen.

## Beschreibung

Die Erfindung betrifft eine einseitig geschlossene Mutter, einen Spreizanker mit dieser Mutter und ein Verfahren zum Schrauben und Festziehen der Mutter.

Aus der Offenlegungsschrift DE 10 2008 020 867 A1 ist eine gattungsgemäße Mutter für einen Hülsenanker bekannt. Zur Verankerung in einem Ankerloch in einem Befestigungsgrund, beispielsweise in einer Wand aus Beton, wird der Hülsenanker durch Drehen der Mutter verspreizt, wodurch einen Konusmutter entlang eines Gewindes bewegt und in eine Spreizhülse der des Hülsenankers eingezogen wird. Das Gewinde und die Mutter sind beim Einschrauben axialfest miteinander verbunden.

Aufgabe der Erfindung ist, eine Mutter vorzuschlagen, mit der sich ein sogenannter Bolzenanker in ein Ankerloch einschlagen und aufspreizen lässt.

Ein Bolzenanker weist einen Ankerschaft mit einem Außengewinde an einem in Einbringrichtung hinteren Ende und einen Spreizkonus an einem in Einbringrichtung vorderen Ende sowie eine auf dem Ankerschaft axial bewegliche Spreizhülse auf. Zur Verankerung in einem Ankerloch wird die Spreizhülse durch Einziehen des Spreizkonus in die Spreizhülse aufgespreizt. Dabei wird der Ankerschaft durch Drehen der Mutter relativ zur Mutter bewegt. Die aufgespreizte Spreizhülse hält den Spreizanker durch Kraft- und/oder Formschluss im Ankerloch. Das Aufspreizen der Spreizhülse kann auch als Aufspreizen des Spreizankers aufgefasst werden. Eine Zugkraft zum Aufspreizen der Spreizhülse wird durch Schrauben einer Mutter auf das Außengewinde des Ankerschafts aufgebracht.

Die Aufgabe wird erfindungsgemäß durch eine Mutter mit den Merkmalen des Anspruchs 1 gelöst. Die erfindungsgemäße Mutter weist ein Innengewinde auf, das sich in einem Grundkörper der Mutter in Längsrichtung erstreckt. Die Mutter ist einseitig an einer Stirnseite geschlossen, d.h. die Mutter weist einseitig eine Stirnwand auf, die den Durchgang des Innengewindes verschließt, wodurch sich die Mutter auf ein Außengewinde eines Ankerschafts eines Bolzenankers, oder grundsätzlich auf jedes Außengewinde eines Schafts, Bolzens, einer Stange usw. schrauben lässt, bis der Ankerschaft innen an der geschlossenen Stirnwand der Mutter anliegt. Eine Schlagkraft zum Eintreiben des Spreizankers in ein Ankerloch wird über die geschlossene äußere Stirnfläche der Mutter auf das innen an der Stirnwand anliegende hintere Ende des Ankerschafts übertragen, so dass das hintere Ende und das Außengewinde des Ankerschafts und ein Mutterngewinde der erfindungsgemäßen Mutter beim Einschlagen des Bolzenankers in das Ankerloch nicht beschädigt werden. Durch die Ausgestaltung der erfindungsgemäßen Mutter ist eine speziell ausgeformte Einschlagfläche am Bolzenanker nicht zwingend notwendig.

Ist der Bolzenanker in das Ankerloch eingetrieben, wird die Mutter drehend angetrieben, wofür sie einen ersten Werkzeugsitz zu einem durch Formschluss drehfesten Ansetzen eines Drehantriebswerkzeugs aufweist. Der Werkzeugsitz kann beispielsweise ein Sechs- oder sonstiger Mehrkant sein, wie er von Muttern bekannt und üblich ist, und an dem beispielsweise ein Gabel-, Ring- oder Rohrschlüssel oder eine Innensechskantnuss als Drehantriebswerkzeug angesetzt werden kann. Durch die Drehung auf dem Außengewinde des Ankerschafts übt die Mutter eine Zugkraft auf den Ankerschaft aus, die den Spreizkonus in die Spreizhülse einzieht und im Ankerloch aufspreizt. Durch eine Axialbewegung des Ankerschafts in Bezug auf die und relativ zur Mutter durch die Drehung der Mutter auf dem Außengewinde des Ankerschafts durchstößt das hintere Ende des Ankerschafts die geschlossene Stirnseite der Mutter. Damit der Ankerschaft die Stirnseite der Mutter durchstoßen kann, weist die erfindungsgemäße Mutter eine erste Sollbruchstelle an der geschlossenen Stirnseite der Mutter auf. Die Sollbruchstelle ist eine Stelle, an der konstruktionsbedingt oder in anderer Weise die Mutter getrennt wird, wenn sie mit einer Belastung beansprucht wird, die eine Festigkeit der Sollbruchstelle übersteigt. Beispielsweise ist die Sollbruchstelle eine Stelle geringer Wanddicke, eine Kerbe und/oder eine Perforierung. Die Sollbruchstelle ist insbesondere linien- bzw. kreisförmig. Die Aufzählung ist beispielhaft und nicht abschließend. Grundsätzlich kann das Drehmoment zum Trennen der Mutter an der ersten Sollbruchstelle auch an anderer Stelle als dem ersten Werkzeugsitz aufgebracht werden.

Vorzugsweise wird nachdem der Ankerschaft die geschlossene Stirnseite der Mutter durchstoßen hat, ein Drehmoment am ersten Werkzeugsitz auf die Mutter ausgeübt, bis sich die Mutter an einer zweiten Sollbruchstelle trennt, die sich zwischen dem ersten Werkzeugsitz und einer offenen Stirnseite der Mutter befindet, insbesondere am Grundkörper. Die zweite Sollbruchstelle begrenzt ein Drehmoment, das am ersten Werkzeugsitz auf die Mutter ausgeübt werden kann, wenn die Mutter beim Drehen auf einem Außengewinde an ihrer offenen Stirnseite axial abgestützt oder zwischen der zweiten Sollbruchstelle und der offenen Stirnseite drehfest gehalten wird. Durch die zweite Sollbruchstelle lässt sich ein durch eine Festigkeit der zweiten Sollbruchstelle festgelegtes Drehmoment auf die Mutter ausüben und es ist wegen des abgetrennten ersten Werkzeugsitzes erkennbar, dass das festgelegte Drehmoment ausgeübt worden ist. Dieses durch die Festigkeit der zweiten Sollbruchstelle festgelegte Drehmoment entspricht insbesondere dem Drehmoment, mit dem der Bolzenanker planmäßig aufgespreizt werden soll.

Um die Mutter nach dem Abtrennen des ersten Werkzeugsitzes drehen zu können, weist sie vorzugsweise einen zweiten Werkzeugsitz auf, der sich auf einer in Längsrichtung anderen Seite der zweiten Sollbruchstelle befindet wie der erste Werkzeugsitz. Zur Begrenzung des auf die Mutter ausgeübten Drehmoments kann sie auch nur den ersten Werkzeugsitz und die zweite Sollbruchstelle, sowie eventuell den zweiten Werkzeugsitz, nicht jedoch die erste Sollbruchstelle aufweisen, sondern beispielsweise an beiden Seiten offen sein.

Eine Außenseite der geschlossenen Stirnwand oder eine Teilfläche der äußeren Stirnfläche bildet eine Schlagfläche, gegen die zum Eintreiben eines Spreizankers geschlagen wird. Eine Ausgestaltung der Erfindung sieht eine in Längsrichtung gegenüber dem ersten Werkzeugsitz erhabene Fläche an der Außenseite der geschlossenen Stirnseite der erfindungsgemäßen Mutter als Schlagfläche vor. "Erhaben" bedeutet, dass die Schlagfläche axial über eine übrige Außenfläche der Stirnseite übersteht. Beispielsweise kann die Mutter einen zylindrischen, axialen Überstand an der Außenseite ihrer geschlossenen Stirnseite zur Bildung der Schlagfläche aufweisen. Insbesondere bildet die erhabene Schlagfläche das hintere Ende der Mutter, wobei sich "hinten" auf eine Aufdrehrichtung der Mutter auf ein Außengewinde bezieht. Auch beispielsweise eine ballige Außenfläche der Stirnseite kann eine Schlagfläche bilden, die erhaben ist. Vorzugsweise ist die Schlagfläche konzentrisch zum Innengewinde der Mutter. Eine Kehle oder Nut an einem Fuß einer Erhebung an der Außenseite der geschlossenen Stirnseite der Mutter kann durch ihre Kerbwirkung die erste Sollbruchstelle bilden.

Eine Ausgestaltung der Erfindung sieht vor, dass die Schlagfläche radial nicht über ein Gewindesackloch mit einem Mutterngewinde der Mutter übersteht. Das bedeutet, dass die Schlagfläche einen Durchmesser aufweist, der nicht größer als der Durchmesser des Gewindesacklochs der Mutter ist. Dadurch ergibt sich ein dünnwandiger Bereich an der geschlossenen Stirnseite der Mutter, der die Schlagfläche umgibt und die erste Sollbruchstelle bildet. Die erste Sollbruchstelle ist vorzugsweise an der geschlossenen Stirnseite der Mutter ausgebildet, denkbar ist allerdings auch eine erste Sollbruchstelle an einem Außen- und/oder Innenumfang der Mutter. Die zweite Sollbruchstelle befindet sich vorzugsweise an einem Außen- und/oder Innenumfang der Mutter.

Eine Ausgestaltung der Erfindung sieht vor, dass die erste Sollbruchstelle einen gedachten, mit dem Innengewinde der Mutter konzentrischen Kreis umschließt. Insbesondere ist dessen Durchmesser so groß wie oder größer als ein Gewindedurchmesser des Innengewindes der Mutter, so dass der Ankerschaft, auf dessen Außengewinde die Mutter geschraubt wird, die geschlossene Stirnseite der Mutter durchstoßen und aus der Mutter austreten kann.

Vorzugsweise ist die erfindungsgemäße Mutter derart ausgebildet, dass ein Drehantriebswerkzeug nicht axial vom geschlossenen Ende der Mutter her am zweiten Werkzeugsitz angesetzt werden kann, jedenfalls so lange wie die Mutter nicht an der zweiten Sollbruchstelle getrennt ist. Beispielsweise überdeckt der erste Werkzeugsitz der Mutter den zweiten Werkzeugsitz der Mutter von der geschlossenen Stirnseite der Mutter gesehen radial. Solange die Mutter nicht an ihrer zweiten Sollbruchstelle getrennt ist, lässt sich kein in Umfangsrichtung geschlossenes Drehantriebswerkzeug wie ein Ringschlüssel, ein Rohrschlüssel oder eine Innensechskantnuss von der geschlossenen Stirnseite herangeführt am zweiten Werkzeugsitz ansetzen, sondern nur ein offenes Drehantriebswerkzeug, wie insbesondere ein Gabelschlüssel. Das bietet einen begrenzten Schutz gegen ein Ansetzen eines Drehantriebswerkzeugs am zweiten Werkzeugsitz, solange die Mutter noch nicht an der zweiten Sollbruchstelle getrennt ist und infolgedessen sich der erste Werkzeugsitz noch an der Mutter befindet. Nur ein Drehantrieb am ersten Werkzeugsitz, oder jedenfalls auf einer der offenen Stirnseite der Mutter abgewandten Seite der zweiten Sollbruchstelle, begrenzt das Drehmoment durch Trennen der Mutter an der zweiten Sollbruchstelle.

Gegenstand des Anspruchs 11 ist ein Bolzenanker mit einem Außengewinde, auf das eine Mutter der vorstehend erläuterten Art geschraubt ist, und der sich mit der Mutter in ein Ankerloch eintreiben und anschließend mit einem Drehmoment, das auf den ersten Werkzeugsitz der Mutter ausgeübt wird, aufspreizen lässt, das von der zweiten Sollbruchstelle begrenzt wird.

Die Erfindung wird nachfolgend anhand eines in der Zeichnung dargestellten Ausführungsbeispiels näher erläutert. Die drei Figuren zeigen einen Spreizanker mit einer Mutter gemäß der Erfindung in Seitenansicht in verschiedenen Zuständen.

Der in der Zeichnung dargestellte Spreizanker 1 weist einen Ankerschaft 2 mit einem Außengewinde 3 an einem in Einbringrichtung hinteren und einem Spreizkonus 4 an einem in Einbringrichtung vorderen Ende auf. Auf dem Ankerschaft 2 ist eine geschlitzte Spreizhülse 5 angeordnet, die auf dem Ankerschaft 2 axial verschieblich ist, sich axial an einer Ringstufe 6 des Ankerschafts 2 abstützt, und die zum Aufspreizen auf den Spreizkonus 4 aufschiebbar bzw. umgekehrt in die zum Aufspreizen der Spreizkonus 4 einziehbar ist.

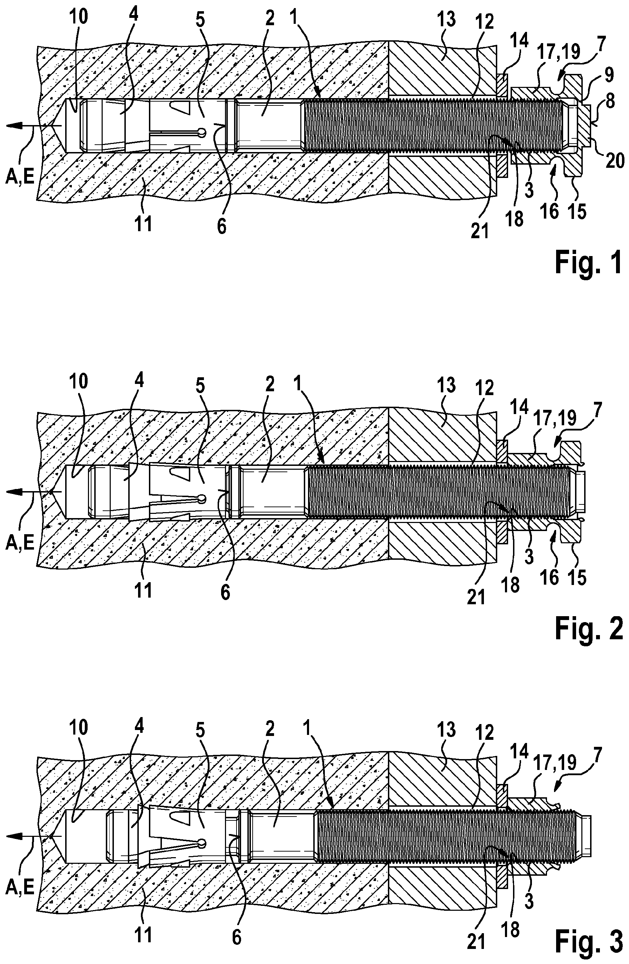

Auf das Außengewinde 3 am hinteren Ende des Ankerschafts 2 ist eine erfindungsgemäße Mutter 7 geschraubt. Die Mutter 7 weist einen Grundkörper 19 mit einem Innengewinde 18 auf, das in einer Bohrung 21 angeordnet ist. Die Bohrung 21 ist an ihrem in Aufschraubrichtung A hinteren Ende mittels einer Stirnwand 20 einseitig geschlossen, so dass ein Gewindesackloch ausgebildet ist. Das Ende des Ankerschafts 2 liegt innen an der Stirnwand 20 an, wie es Figur 1 zeigt. Außen an der Stirnwand 20 weist die Mutter 7 eine koaxiale, axial niedrige, zylindrische Erhöhung auf, deren Stirnfläche eine erhabene Schlagfläche 8 der Mutter 7 bildet. Mit "erhaben" ist gemeint, dass sich die Schlagfläche 8 in einem einer Höhe der zylindrischen Erhöhung entsprechenden axialen Abstand von einer übrigen Stirnfläche an der geschlossenen Stirnseite der Mutter 7 außerhalb der Erhöhung befindet und axial über einen ersten Werkzeugsitz 15 übersteht. Ein Durchmesser der Erhöhung ist kleiner als ein Außendurchmesser des Außengewindes 3 des Ankerschafts 2 des Spreizankers 1, wodurch im Bereich eines Sacklochs der Mutter 7 eine dünnwandige Ringfläche gebildet ist, die eine erste Sollbruchstelle 9 der Mutter 7 bildet. Die erste Sollbruchstelle 9 geht mit einer umlaufenden 90°-Innenecke in die Erhöhung über, wobei die Innenecke durch eine von ihr unter Belastung ausgehende Kerbwirkung ein Trennen an der ersten Sollbruchstelle 9 unterstützt. Eine Zylinderform der die Schlagfläche 8 bildenden Erhöhung ist nicht zwingend.

Zum Setzen des Spreizankers 1 in einem Ankerloch 10 in einem Ankergrund 11 wird der Spreizanker 1 mit dem Spreizkonus 4 voraus durch ein Durchgangsloch 12 in einem Anbauteil 13 hindurch durch Schläge auf die Schlagfläche 8 der Mutter 7 in das Ankerloch 10 eingetrieben. Dabei stützt sich die Spreizhülse 5 axial an der Ringstufe 6 des Ankerschafts 2 ab. Im Ausführungsbeispiel ist eine Unterlegscheibe 14 zwischen der Mutter 7 und dem Anbauteil 13 auf dem Ankerschaft 2 angeordnet. Weil das Ende des Ankerschafts 2 innen an der Stirnwand 20 der Mutter 7 flächig anliegt, ist die erste Sollbruchstelle 9 der Mutter 7 entlastet und trennt sich nicht. Die einseitig geschlossene Mutter 7 schützt das Außengewinde 3 des Ankerschafts 2 und das Innengewinde 18 der Mutter 7 vor Beschädigung beim Eintreiben des Spreizankers 1 in das Ankerloch 10. Das Anbauteil 13 ist ein Bauteil, das mit dem Spreizanker 1 am Ankergrund 11 befestigt wird.

Das Eintreiben des Spreizankers 1 in das Ankerloch 10 ist spätestens dann beendet, wenn die offene, vordere Stirnseite der Mutter 7 auf der Unterlegscheibe 14 aufsetzt. Das Eintreiben des Spreizankers 1 kann auch vorher beendet werden. Zum Aufspreizen der Spreizhülse 5 wird die Mutter 7 auf dem Außengewinde 3 des Ankerschafts 2 des Spreizankers 1 gedreht und zieht über den Ankerschaft 2 den Spreizkonus 4 in die Spreizhülse 5 ein, die an einer Wand des Ankerlochs 10 anliegt und von der Wand des Ankerlochs 10 rückgehalten wird. Der Spreizkonus 4 spreizt die Spreizhülse 5 wie in Figuren 2 und 3 zu sehen auf, so dass der Spreizanker 1 durch Kraft- und/oder Formschluss der Spreizhülse 5 mit der Wand des Ankerlochs 10 im Ankergrund gehalten ist, was auch als Verankerung des Spreizankers 1 im Ankergrund 11 aufgefasst werden kann. Das Aufspreizen der Spreizhülse 5 kann auch als Aufspreizen des Spreizankers 1 aufgefasst werden.

Zu Beginn des Drehens der Mutter 7 auf dem Außengewinde 3 des Ankerschafts 2 durchstößt der Ankerschaft 2 das geschlossene Stirnende der Mutter 7, wobei er die Mutter 7 an der ersten Sollbruchstelle 9 trennt. Die Stirnwand 20 mit der zylindrischen Erhöhung, deren Stirnfläche die Schlagfläche 8 bildet, wird dabei von der übrigen Mutter 7 getrennt (Figur 2). Ein Loch in der ursprünglich geschlossenen Stirnseite der Mutter 7, das durch das Durchstoßen der ursprünglich geschlossenen Stirnseite der Mutter 7 mit dem Ankerschaft 2 und das Trennen der Mutter 7 an der ersten Sollbruchstelle 9 entsteht, ist so groß, dass der Ankerschaft 2 durch die ursprünglich geschlossene Stirnseite der Mutter 7 austreten kann.

Durch Weiterdrehen der Mutter 7 auf dem Außengewinde 3 des Ankerschafts 2 wird die Spreizhülse 5 weiter aufgespreizt. Ein Drehantrieb erfolgt an einem ersten Werkzeugsitz 15 der Mutter 7. Im Ausführungsbeispiel ist der erste Werkzeugsitz 15 an die geschlossene Stirnseite der Mutter 7 anschließend und wie bei Muttern üblich als Sechskant ausgebildet. Es ist auch ein anderer Mehrkant, beispielsweise ein Vierkant als erster Werkzeugsitz 15 möglich. Allgemein ist der erste Werkzeugsitz 15 so ausgebildet, dass ein Drehantriebswerkzeug, wie beispielsweise ein Gabelschlüssel, Ringsschlüssel, Rohrschlüssel oder Innensechskantnuss, zu einem Drehen der Mutter 7 durch Formschluss drehfest am ersten Werkzeugsitz 15 angesetzt werden kann. Der erste Werkzeugsitz 15 muss nicht im Anschluss an die ursprünglich geschlossene Stirnseite der Mutter 7 angeordnet sein, sondern ist allgemein zwischen der ersten Sollbruchstelle 9 und einer zweiten Sollbruchstelle 16 angeordnet, die sich zwischen dem ersten Werkzeugsitz 15 und der offenen Stirnseite der Mutter 7 befindet.

Im Ausführungsbeispiel ist die zweite Sollbruchstelle 16 als umlaufende Nut auf der der offenen Stirnseite der Mutter 7 zugewandten Seite des ersten Werkzeugsitzes 15 und an den ersten Werkzeugsitz 15 anschließend ausgebildet. Anders als die umlaufende, dargestellte Rundnut kann die zweite Sollbruchstelle 16 beispielsweise auch durch eine umlaufende V-Nut gebildet sein, die aufgrund einer Kerbwirkung bei Belastung ein Trennen der Mutter 7 an der zweiten Sollbruchstelle 16 unterstützt. Die Sollbruchstellen 9, 16 können auch anders als als Innenecke oder Nut, beispielsweise als Perforation ausgeführt sein (nicht dargestellt). Die zweite Sollbruchstelle 16 begrenzt ein Drehmoment, das am ersten Werkzeugsitz 15 auf die Mutter 7 ausgeübt werden kann, indem bei Überschreiten eines definierten maximalen Drehmoments, bei dem der Bolzenanker 1 planmäßig verspreizt ist, die Mutter 7 an der zweiten Sollbruchstelle 16 und damit der erste Werkzeugsitz 15 von der Mutter 7 im Übrigen getrennt wird, wie es in Figur 3 zu sehen ist. Das Aufspreizen der Spreizhülse 5 und damit die Verankerung des Spreizankers 1 im Ankergrund 11 werden durch das Trennen des ersten Werkzeugsitzes 15, an dem die Mutter 7 gedreht wird, an der zweiten Sollbruchstelle 16 von der Mutter 7 im Übrigen beendet.

Zwischen der zweiten Sollbruchstelle 16 und ihrer offenen Stirnseite weist die Mutter 7 am Grundkörper 19 einen zweiten Werkzeugsitz 17 auf, der im Ausführungsbeispiel wie der erste Werkzeugsitz 15 als Sechskant ausgebildet ist. Ein Sechskant oder auch ein Vierkant oder ein sonstiger Mehrkant als zweiter Werkzeugsitz 17 ist nicht zwingend für die Erfindung, wie für den ersten Werkzeugsitz 15 sind auch für den zweiten Werkzeugsitz 17 andere Formen möglich, die ein durch Formschluss drehfestes Ansetzen eines Drehantriebswerkzeugs ermöglichen. Am zweiten Werkzeugsitz 17 lässt sich der Grundkörper 19 der Mutter 7 drehen, um eventuell die Mutter 7 nachzuziehen oder vom Außengewinde 3 des Ankerschafts 2 abzuschrauben.

Der erste Werkzeugsitz 15 ist größer als der zweite Werkzeugsitz 17, so dass von der ursprünglich geschlossenen Stirnseite der Mutter 7 gesehen der erste Werkzeugsitz 15 nach außen über den zweiten Werkzeugsitz 17 übersteht, solange sich der erste Werkzeugsitz 15 an der Mutter 7 befindet und die Mutter 7 nicht an der zweiten Sollbruchstelle 16 getrennt ist. Das heißt von der ursprünglich geschlossenen Stirnseite der Mutter 7 gesehen, überdeckt der erste Werkzeugsitz 15 den zweiten Werkzeugsitz 17. Dadurch ist der zweite Werkzeugsitz 17 axial von der ursprünglich geschlossenen Stirnseite der Mutter 7 aus nicht zum Ansetzen eines Drehantriebswerkzeugs zugänglich und es lässt sich kein geschlossenes Drehantriebswerkzeug wie ein Ringschlüssel, Rohrschlüssel oder eine Innensechskantnuss am zweiten Werkzeugsitz 17 ansetzen, solange sich der erste Werkzeugsitz 15 an der Mutter 7 befindet. Das stellt zwar nicht sicher, dass die Mutter 7 zum Aufspreizen der Spreizhülse 5 am ersten Werkzeugsitz 15 drehend angetrieben wird, weil der zweite Werkzeugsitz 17 beispielsweise zum Ansetzen eines Gabelschlüssels zugänglich ist, auch wenn sich der erste Werkzeugsitz 15 noch an der Mutter 7 befindet. Jedoch wirkt der über den zweiten Werkzeugsitz 17 überstehende erste Werkzeugsitz 15 einem Drehen der Mutter 7 am zweiten Werkzeugsitz 17 entgegen, solange der erste Werkzeugsitz 15 noch an der Mutter 7 vorhanden ist. Das erhöht eine Wahrscheinlichkeit, dass die Mutter 7 am ersten Werkzeugsitz 15 drehend angetrieben wird, bis das maximale Drehmoment der zweiten Sollbruchstelle 16 erreicht und überschritten und die Mutter 7 an der zweite Sollbruchstelle 16 getrennt wird. Dadurch wird erreicht, dass die Spreizhülse 5 des Spreizankers 1 mit dem durch die zweite Sollbruchstelle 16 der Mutter 7 festgelegten maximalem Drehmoment aufgespreizt wird.

### Bezugszeichenliste

### Einseitig geschlossene Mutter, Spreizanker mit dieser Mutter und Verfahren zum Schrauben und Festziehen der Mutter

- 1: Spreizanker
- 2: Ankerschaft
- 3: Außengewinde
- 4: Spreizkonus
- 5: Spreizhülse
- 6: Ringstufe
- 7: Mutter
- 8: Schlagfläche
- 9: erste Sollbruchstelle
- 10: Ankerloch
- 11: Ankergrund
- 12: Durchgangsloch
- 13: Anbauteil
- 14: Unterlegscheibe
- 15: erster Werkzeugsitz
- 16: zweite Sollbruchstelle
- 17: zweiter Werkzeugsitz
- 18: Innengewinde
- 19: Grundkörper
- 20: Stirnfläche
- 21: Bohrung
- E: Einbringrichtung
- A: Aufschraubrichtung

## Patentansprüche

1. Einseitig geschlossene Mutter (7) mit einem Innengewinde (18), das sich in einem Grundkörper (19) der Mutter (7) in Längsrichtung erstreckt, und mit einer ersten Sollbruchstelle (9), **dadurch gekennzeichnet, dass** die erste Sollbruchstelle (9) zwischen einer Schlagfläche (8) an einer geschlossenen Stirnseite der Mutter (7) und einem ersten Werkzeugsitz (15) zu einem durch Formschluß drehfesten Ansetzen eines Drehantriebswerkzeugs ausgebildet ist.

2. Mutter nach Anspruch 1, **dadurch gekennzeichnet, dass** die Mutter (7) eine zweite Sollbruchstelle (16) aufweist, die zwischen dem ersten Werkzeugsitz (15) und einem zweiten Werkzeugsitz (17) zu einem durch Formschluß drehfesten Ansetzen eines Drehantriebswerkzeugs ausgebildet ist.

3. Mutter nach Anspruch 1 oder 2, **dadurch gekennzeichnet, dass** die Schlagfläche (8) in Längsrichtung gegenüber dem ersten Werkzeugsitz (15) erhaben ist.

4. Mutter nach einem der Ansprüche 1 bis 3, **dadurch gekennzeichnet, dass** die Schlagfläche (8) radial nicht über ein Gewindesackloch der Mutter (7) übersteht.

5. Mutter nach einem der Ansprüche 1 bis 4, **dadurch gekennzeichnet, dass** die erste Sollbruchstelle (9) die Schlagfläche (8) an der Stirnseite der Mutter (7) umschließt.

6. Mutter nach einem der Ansprüche 1 bis 5, **dadurch gekennzeichnet, dass** die erste Sollbruchstelle (9) einen gedachten, konzentrischen Kreis umschließt.

7. Mutter nach einem der vorhergehenden Ansprüche, **dadurch gekennzeichnet, dass** sich die zweite Sollbruchstelle (16) an einem Umfang der Mutter (7) befindet, insbesondere am Grundkörper (19).

8. Mutter nach einem der vorhergehenden Ansprüche, **dadurch gekennzeichnet, dass** der zweite Werkzeugsitz (17) axial vom geschlossenen Ende der Mutter (7) her nicht zum Ansetzen eines Drehantriebswerkzeugs zugänglich ist.

9. Mutter nach einem der vorhergehenden Ansprüche, **dadurch gekennzeichnet, dass** der erste Werkzeugsitz (15) den zweiten Werkzeugsitz (17) auf einer der geschlossenen Stirnseite der Mutter (7) zugewandten Seite radial überdeckt.

10. Mutter nach einem der vorhergehenden Ansprüche, **dadurch gekennzeichnet, dass** mindestens einer der beiden Werkzeugsitze (15, 17) einen Mehrkant aufweist.

11. Bolzenanker mit einem Außengewinde (3), auf das eine Mutter (7) nach einem der vorhergehenden Ansprüche geschraubt ist.

12. Bolzenanker nach Anspruch 11, **dadurch gekennzeichnet, dass** der Spreizanker (1) innen an der geschlossenen Stirnseite der Mutter (7) anliegt.

13. Verfahren zum Schrauben und Festziehen einer Mutter nach einem der Ansprüche 1 bis 10 auf einen ein Außengewinde aufweisenden Schaft, **dadurch gekennzeichnet, dass** die Mutter (7) auf dem Außengewinde (3) gedreht wird, bis der Schaft (2) von innen gegen die geschlossene Stirnseite der Mutter (7) stößt und die Mutter (7) an der ersten Sollbruchstelle (9) trennt, und dass die Mutter (7) am ersten Werkzeugsitz (15) drehend angetrieben wird, bis ein auf den ersten Werkzeugsitz (15) der Mutter ausgeübtes Drehmoment die Mutter (7) an der zweiten Sollbruchstelle (16) trennt.
